# EUROPEAN PATENT APPLICATION

(11) **EP 4 401 490 A1**
(43) Date of publication of application: **17.07.2024**
(21) Application number: 22886033.4
(22) Date of filing: 26.10.2022
(51) Int. Cl.: H04W 72/04, H04L 5/00

(54) **INTERFERENCE DETERMINATION METHOD AND APPARATUS**

(30) Priority: 28.10.2021 CN 202111268498
(71) Applicant: Huawei Technologies Co., Ltd., Shenzhen, Guangdong 518129 (CN)
(72) Inventor: ZHANG, Liwen, Shenzhen, Guangdong 518129 (CN); XU, Zhou, Shenzhen, Guangdong 518129 (CN); JU, Shuangshuang, Shenzhen, Guangdong 518129 (CN)
(74) Representative: Pfenning, Meinig & Partner mbB
(86) International application number: PCT/CN2022/127739
(87) International publication number: WO 2023/072157

(57) **Abstract**

Embodiments of this application disclose an interference determining method and an apparatus thereof. The method includes: A network device receives, from a terminal device, first channel quality information corresponding to a first bandwidth and second channel quality information corresponding to an aggregated bandwidth; determines, based on the first channel quality information and the second channel quality information, interference received by the terminal device when the terminal device accesses the aggregated bandwidth; and sends bandwidth configuration information to the terminal device based on the interference. The first channel quality information is sent by the terminal device when the terminal device accesses the first bandwidth, and the second channel quality information is sent by the terminal device when the terminal device accesses the aggregated bandwidth. The aggregated bandwidth is obtained by aggregating at least the first bandwidth and a second bandwidth, and a spectrum of a third bandwidth is spaced between a spectrum of the first bandwidth and a spectrum of the second bandwidth. Embodiments of this application help prevent the terminal device from operating in a bandwidth with strong interference, and help improve performance of the terminal device.

## Description

This application claims priority to Chinese Patent Application No. 202111268498.6, filed with the China National Intellectual Property Administration on October 28, 2021 and entitled "INTERFERENCE DETERMINING METHOD AND APPARATUS THEREOF", which is incorporated herein by reference in its entirety.

### TECHNICAL FIELD

This application relates to the field of communication technologies, and in particular, to an interference determining method and an apparatus thereof.

### BACKGROUND

To make full use of discrete spectrum resources, a solution of aggregating a plurality of discrete spectrum fragments into a high-bandwidth cell is proposed. In this solution, through non-consecutive scheduling, a user can enjoy high bandwidth.

A filter in a terminal device may filter out interference outside a continuous spectrum. However, for a high bandwidth obtained by aggregating a plurality of discrete spectrum fragments, because the high bandwidth obtained by aggregating a plurality of discrete spectrum fragments is used as one single carrier in a current discrete spectrum solution, the filter cannot filter out interference from another spectrum between the discrete spectrums. In addition, the interference cannot be quantized. Consequently, the terminal device may operate of strong interference, and performance of the terminal device is affected.

### SUMMARY

Embodiments of this application provide an interference determining method and an apparatus thereof, to determine interference received by a terminal device when the terminal device accesses an aggregated bandwidth, and send bandwidth configuration information to the terminal device based on the interference. This helps prevent the terminal device from operating in a bandwidth with strong interference, and helps improve performance of the terminal device.

According to a first aspect, an embodiment of this application provides an interference determining method. The method may be performed by a network device, or may be performed by a chip used in the network device. The method includes: A network device receives, from a terminal device, first channel quality information corresponding to a first bandwidth, where the first channel quality information is sent by the terminal device when the terminal device accesses the first bandwidth; the network device receives, from the terminal device, second channel quality information corresponding to an aggregated bandwidth, where the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth; the network device determines, based on the first channel quality information and the second channel quality information, interference received by the terminal device when the terminal device accesses the aggregated bandwidth; and the network device sends bandwidth configuration information to the terminal device based on the interference.

In this technical solution, the interference received by the terminal device when the terminal device accesses the aggregated bandwidth is determined based on the first channel quality information and the second channel quality information, so that the interference can be quantized. In addition, this helps adaptively adjust, based on the interference, whether the terminal device operates in a high bandwidth or a low bandwidth. This helps the terminal device to operate in an operating bandwidth with low interference, that is, helps prevent the terminal device from operating in a bandwidth with strong interference, and helps improve performance of the terminal device.

In an implementation, if an interference value of the interference is greater than a preset interference value, the bandwidth configuration information indicates that an operating bandwidth of the terminal device is the first bandwidth.

This technical solution helps the terminal device to operate in the first bandwidth with low interference, and helps improve performance of the terminal device.

In an implementation, if the interference value of the interference is less than or equal to the preset interference value, the bandwidth configuration information indicates that the operating bandwidth of the terminal device is the aggregated bandwidth.

In this technical solution, when the interference is low, the device operates in the aggregated bandwidth, which helps obtain a high bandwidth service.

In an implementation, a specific implementation in which the network device determines, based on the first channel quality information and the second channel quality information, the interference received by the terminal device when the terminal device accesses the aggregated bandwidth may be determining a ratio of an evaluation value of the second channel quality information to an evaluation value of the first channel quality information as the interference value of the interference received by the terminal device when the terminal device accesses the aggregated bandwidth.

In an implementation, both the first bandwidth and the second bandwidth correspond to a first operator, and the third bandwidth corresponds to a second operator.

In an implementation, the method may further include: The network device receives capability information of the terminal device from the terminal device, where the capability information indicates that the terminal device supports accessing the aggregated bandwidth; and the network device determines, based on the capability information, that the terminal device supports accessing the aggregated bandwidth.

In an implementation, the method may further include: The network device sends a channel state information reference signal CSI-RS of a cell corresponding to the first bandwidth, where the first channel quality information is determined by the terminal device based on the CSI-RS when the terminal device accesses the cell.

In an implementation, the method may further include: The network device sends configuration information of a CSI-RS to the terminal device, where the configuration information of the CSI-RS includes configuration information of the CSI-RS corresponding to the first bandwidth and configuration information of a CSI-RS corresponding to the second bandwidth.

In an implementation, channel quality information includes one or more of a received signal strength indication RSSI or a channel quality indication CQI.

According to a second aspect, an embodiment of this application provides another interference determining method. The method may be performed by a terminal device, or may be a chip used in the terminal device. The method includes: When a terminal device accesses a first bandwidth, the terminal device sends, to a network device, first channel quality information corresponding to the first bandwidth; when the terminal device accesses an aggregated bandwidth, the terminal device sends, to the network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth; and the terminal device receives bandwidth configuration information from the network device, where the bandwidth configuration information is sent by the network device based on interference received by the terminal device when the terminal device accesses the aggregated bandwidth, and the interference is determined based on the first channel quality information and the second channel quality information.

In this technical solution, the first channel quality information and the second channel quality information are reported, so that the network device can determine the interference received by the terminal device when the terminal device accesses the aggregated bandwidth. In this manner, the interference can be quantized. In addition, this helps adaptively adjust, based on the interference, whether the terminal device operates in a high bandwidth or a low bandwidth. This helps the terminal device to operate in an operating bandwidth with low interference, that is, helps prevent the terminal device from operating in a bandwidth with strong interference, and helps improve performance of the terminal device.

In an implementation, if an interference value of the interference is greater than a preset interference value, the bandwidth configuration information indicates that an operating bandwidth of the terminal device is the first bandwidth.

This technical solution helps the terminal device to operate in the first bandwidth with low interference, and helps improve performance of the terminal device.

In an implementation, if the interference value of the interference is less than or equal to the preset interference value, the bandwidth configuration information indicates that the operating bandwidth of the terminal device is the aggregated bandwidth.

In this technical solution, when the interference is low, the device operates in the aggregated bandwidth, which helps obtain a high bandwidth service.

In an implementation, the interference value of the interference is a ratio of an evaluation value of the second channel quality information to an evaluation value of the first channel quality information.

In an implementation, both the first bandwidth and the second bandwidth correspond to a first operator, and the third bandwidth corresponds to a second operator.

In an implementation, the method may further include: The terminal device sends capability information of the terminal device to the network device, where the capability information indicates that the terminal device supports accessing the aggregated bandwidth.

In an implementation, the method may further include: The terminal device receives, from the network device, a channel state information reference signal CSI-RS of a cell corresponding to the first bandwidth; and the terminal device determines the first channel quality information based on the CSI-RS.

In an implementation, the method may further include: The terminal device receives configuration information of a CSI-RS from the network device, where the configuration information of the CSI-RS includes configuration information of the CSI-RS corresponding to the first bandwidth and configuration information of a CSI-RS corresponding to the second bandwidth.

In an implementation, channel quality information includes one or more of a received signal strength indication RSSI or a channel quality indication CQI.

According to a third aspect, an embodiment of this application provides a communication apparatus. The communication apparatus has some or all functions of the network device in the method example according to the first aspect. For example, a function of the communication apparatus may include functions in some or all embodiments of this application, or may include a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a processing unit and a communication unit. The processing unit is configured to support the communication apparatus in performing a function of the network device in the foregoing methods. The communication unit is configured to support communication between the communication apparatus and another device. The communication apparatus may further include a storage unit. The storage unit is configured to couple to the processing unit and a sending unit, and stores a computer program and data that are necessary for the communication apparatus.

In an implementation, the communication apparatus includes the communication unit and the processing unit. The communication unit is configured to receive, from a terminal device, first channel quality information corresponding to a first bandwidth, where the first channel quality information is sent by the terminal device when the terminal device accesses the first bandwidth; the communication unit is further configured to receive, from the terminal device, second channel quality information corresponding to an aggregated bandwidth, where the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth; the processing unit is configured to determine, based on the first channel quality information and the second channel quality information, interference received by the terminal device when the terminal device accesses the aggregated bandwidth; and the communication unit is further configured to send bandwidth configuration information to the terminal device based on the interference.

For example, the processing unit may be a processor, the communication unit may be a transceiver, and the storage unit may be a memory.

In an implementation, the communication apparatus includes the transceiver and the processor. The transceiver is configured to receive, from a terminal device, first channel quality information corresponding to a first bandwidth, where the first channel quality information is sent by the terminal device when the terminal device accesses the first bandwidth; the transceiver is further configured to receive, from the terminal device, second channel quality information corresponding to an aggregated bandwidth, where the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth; the processor is configured to determine, based on the first channel quality information and the second channel quality information, interference received by the terminal device when the terminal device accesses the aggregated bandwidth; and the transceiver is further configured to send bandwidth configuration information to the terminal device based on the interference.

According to a fourth aspect, an embodiment of this application provides a communication apparatus. The communication apparatus has some or all functions of the terminal device in the method example according to the second aspect. For example, a function of the communication apparatus may include functions in some or all embodiments of this application, or may include a function of independently implementing any embodiment in this application. The function may be implemented by hardware, or may be implemented by hardware executing corresponding software. The hardware or the software includes one or more units or modules corresponding to the functions.

In an implementation, a structure of the communication apparatus may include a processing unit and a communication unit. The processing unit is configured to support the communication apparatus in performing a function of the terminal device in the foregoing methods. The communication unit is configured to support communication between the communication apparatus and another device. The communication apparatus may further include a storage unit. The storage unit is configured to couple to the processing unit and a sending unit, and stores a computer program and data that are necessary for the communication apparatus.

In an implementation, the communication apparatus includes the processing unit and the communication unit. The processing unit is configured to: when the communication apparatus accesses a first bandwidth, invoke the communication unit to send, to a network device, first channel quality information corresponding to the first bandwidth; the processing unit is further configured to: when the communication apparatus accesses an aggregated bandwidth, invoke the communication unit to send, to the network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth; and the processing unit is further configured to invoke the communication unit to receive bandwidth configuration information from the network device, where the bandwidth configuration information is sent by the network device based on interference received by the communication apparatus when the communication apparatus accesses the aggregated bandwidth, and the interference is determined based on the first channel quality information and the second channel quality information.

For example, the processing unit may be a processor, the communication unit may be a transceiver, and the storage unit may be a memory.

In an implementation, the communication apparatus includes the processor and the transceiver. The processor is configured to: when the communication apparatus accesses a first bandwidth, invoke the transceiver to send, to a network device, first channel quality information corresponding to the first bandwidth; the processor is further configured to: when the communication apparatus accesses an aggregated bandwidth, invoke the transceiver to send, to the network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth; and the processor is further configured to invoke the transceiver to receive bandwidth configuration information from the network device, where the bandwidth configuration information is sent by the network device based on interference received by the communication apparatus when the communication apparatus accesses the aggregated bandwidth, and the interference is determined based on the first channel quality information and the second channel quality information.

According to a fifth aspect, an embodiment of this application further provides a communication system. The system may include the network device according to the first aspect and the terminal device according to the second aspect, or may include the communication apparatus according to the third aspect and the communication apparatus according to the fourth aspect.

According to a sixth aspect, an embodiment of the present invention provides a computer-readable storage medium. The computer-readable storage medium stores a computer program, the computer program includes program instructions, and when a communication apparatus executes the program instructions, the communication apparatus is enabled to perform the method according to the first aspect.

According to a seventh aspect, an embodiment of the present invention provides a computer-readable storage medium. The computer-readable storage medium stores a computer program, the computer program includes program instructions, and when a communication apparatus executes the program instructions, the communication apparatus is enabled to perform the method according to the second aspect.

According to an eighth aspect, this application further provides a computer program product including a computer program or instructions. When the computer program or the instructions is/are run on a computer, the computer is enabled to perform the method according to the first aspect.

According to a ninth aspect, this application further provides a computer program product including a computer program or instructions. When the computer program or the instructions is/are run on a computer, the computer is enabled to perform the method according to the second aspect.

According to a tenth aspect, this application provides a chip system. The chip system includes at least one processor and an interface, configured to implement a function according to the first aspect, for example, determine or process at least one of data and information in the foregoing methods. In a possible design, the chip system further includes a memory, and the memory is configured to store a computer program and data that are necessary for a transmitting end. The chip system may include a chip, or may include a chip and another discrete component.

According to an eleventh aspect, this application provides a chip system. The chip system includes at least one processor and an interface, configured to implement a function according to the second aspect, for example, determine or process at least one of data and information in the foregoing methods. In a possible design, the chip system further includes a memory, and the memory is configured to store a computer program and data that are necessary for a receiving end. The chip system may include a chip, or may include a chip and another discrete component.

### BRIEF DESCRIPTION OF DRAWINGS

FIG. 1a is a schematic diagram of spectrum division;
FIG. 1b is a schematic diagram of interference in four directions that may exist in an actual application of a high bandwidth;
FIG. 1c is a schematic diagram of operation of two levels of filters;
FIG. 1d is a schematic diagram of an architecture of a communication system according to an embodiment of this application;
FIG. 2 is a schematic flowchart of an interference determining method according to an embodiment of this application;
FIG. 3 is a schematic flowchart of another interference determining method according to an embodiment of this application;
FIG. 4 is a schematic diagram of a structure of a communication apparatus according to an embodiment of this application;
FIG. 5 is a schematic diagram of a structure of another communication apparatus according to an embodiment of this application; and
FIG. 6 is a schematic diagram of a structure of a chip according to an embodiment of this application.

### DESCRIPTION OF EMBODIMENTS

To better understand technical solutions provided in embodiments of this application, technical terms in embodiments of this application are first described.

### (1) Aggregated bandwidth

The aggregated bandwidth is a bandwidth obtained by aggregating a plurality of segments of spectrums, or may be understood as a high bandwidth obtained by aggregating a plurality of segments of low bandwidths. An organization responsible for spectrum division divides an available spectrum into segments, to allocate to different operators for use. A low bandwidth may be a segment of spectrum obtained through spectrum division, and a high bandwidth may be a segment of spectrum obtained by aggregating a plurality of low bandwidths. It should be noted that the low bandwidth and the high bandwidth are concepts proposed in this solution for ease of understanding, and "low" and "high" are not used to measure a width of a spectrum. In this embodiment of this application, the high bandwidth and the aggregated bandwidth may have a same meaning. A low bandwidth may also be referred to as a bandwidth part (bandwidth part, BWP).

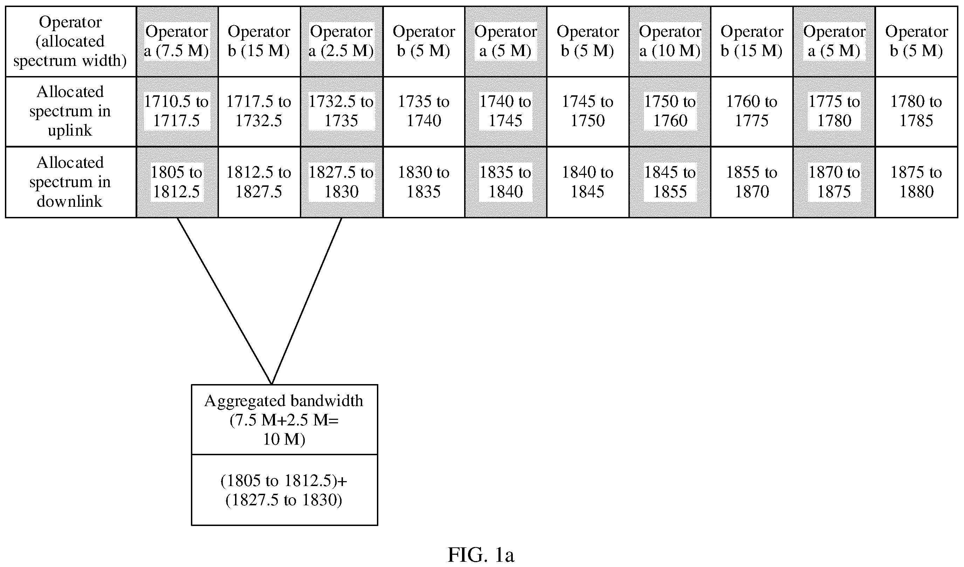

For example, refer to a schematic diagram of spectrum division in FIG. 1a. A spectrum 1710.5 to 1785 is used for uplink transmission, and a spectrum 1805 to 1880 is used for downlink transmission. FIG. 1a shows specific spectrums that are in the spectrums 1710.5 to 1785 and 1805 to 1880 and that are allocated to an operator a, and specific spectrums that are allocated to an operator b. In FIG. 1a, a spectrum in each column may indicate a spectrum of a low bandwidth. As shown in FIG. 1a, two segments of low bandwidths allocated to the operator a may be aggregated into one segment of high bandwidth, and a spectrum width of the high bandwidth is 10 M. Although spectrums of the two segments of low bandwidths that are aggregated into the high bandwidth are discontinuous, when the high bandwidth is scheduled, non-consecutive scheduling may be performed, to fully use the 10 M discrete spectrum, so as to provide high bandwidth experience.

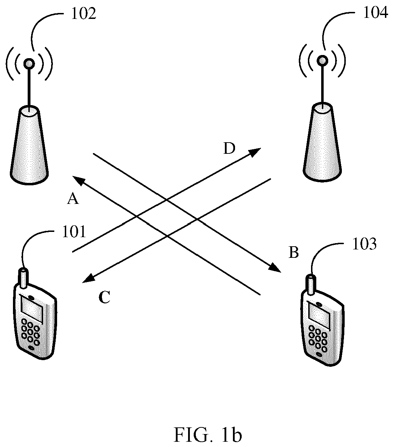

However, in an actual application of the high bandwidth, interference in four directions may exist, as shown in FIG. 1b. FIG. 1b includes a terminal device 1 (101), a terminal device 2 (103), a network device 1 (102), and a network device 2 (104). Interference in a direction A, direction B, and direction D can be resolved, but interference in a direction C cannot be resolved currently. When the interference is strong, a blocking phenomenon may occur on the terminal device 101, that is, the terminal device 101 cannot obtain a wanted signal. A reason why the terminal device 101 cannot filter out the interference is described below.

It should be noted that, that the spectrums of the two segments of aggregated low bandwidths shown in FIG. 1a are discontinuous is used as an example. In another implementation, a plurality of segments of low bandwidths of which spectrums are continuous may alternatively be aggregated into a high bandwidth. For example, a spectrum 1805 to 1812.5 allocated to the operator a and a spectrum 1812.5 to 1827.5 allocated to the operator b may be aggregated into a segment of high bandwidth. 1812.5 in the spectrum 1805 to 1812.5 is the same as 1812.5 in the spectrum 1812.5 to 1827.5, which indicates that the two segments of spectrums are continuous.

### (2) Two levels of filters in a terminal device

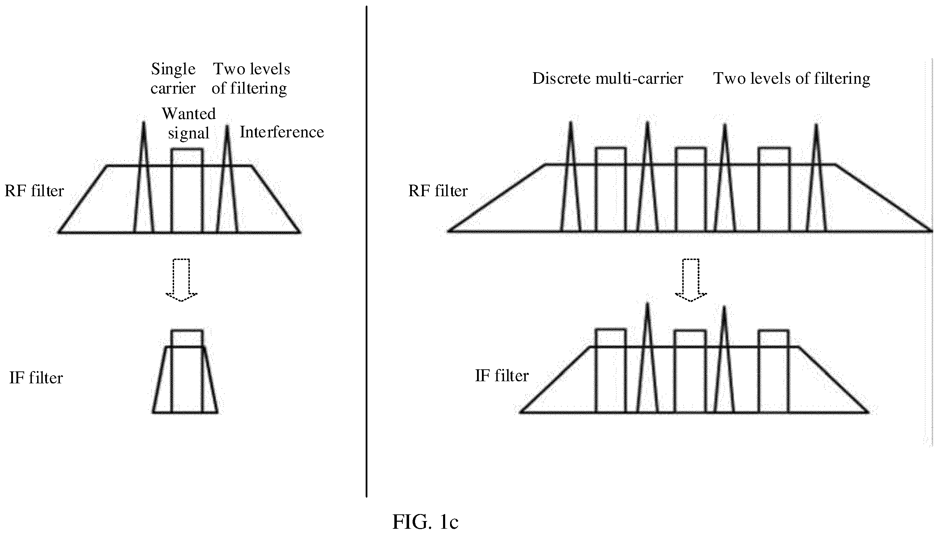

The terminal device includes two levels of filters: a radio frequency (radio frequency, RF) filter and an intermediate frequency (intermediate frequency, IF) filter. The RF filter is a bandpass filter, and can filter out signals outside the target bandwidth (Band). A wanted signal and another carrier frequency signal or interference in the target band are received. The IF filter can automatically adjust a width of the filter based on a carrier bandwidth of the wanted signal, to filter out interference outside a carrier width. A schematic diagram of operation of the two levels of filters in FIG. 1c is used as an example. The left part in FIG. 1c shows a filtering process of the two levels of filters for a single carrier, and the right part in FIG. 1c shows a filtering process of the two levels of filters for a discrete multi-carrier. A column indicates a wanted signal, and a triangle indicates interference. It can be learned from the left part in FIG. 1c that, for the single carrier, the interference may be filtered out after the single carrier passes through the two levels of filters.

In the current discrete spectrum solution, a high bandwidth obtained by aggregating a plurality of discrete spectrum fragments is as one single carrier, and the RF filter can filter out interference outside a band between a lowest frequency and a highest frequency corresponding to the high bandwidth. For example, the high bandwidth in FIG. 1a is used as an example, and the RF filter can filter out interference outside a frequency range (1805 to 1830). The IF filter adaptively adjusts a width of the filter based on a width of the single carrier and may receive a signal of another spectrum (1812.5 to 1827.5), and the signal of another spectrum is interference. Therefore, the interference from the another spectrum cannot be filtered out through the two levels of filters in the terminal device. For another example, it can be learned from the right part in FIG. 1c that, for the discrete multi-carrier, because the discrete multi-carrier is used as a single carrier, interference still exists and is not filtered out after the two levels of filters are passed through. It should be noted that the single carrier may be understood as a low bandwidth carrier, a multi-carrier may be understood as a plurality of low bandwidth carriers, and the discrete multi-carrier may be understood as a plurality of low bandwidth carriers whose frequencies are discontinuous.

After processing of the filters, power may be adjusted. In a power adjustment process, total signal power (total power of the wanted signal and noise) is amplified to an analog-to-digital converter (analog-to-digital converter, ADC) dynamic range interval. However, when interference strength is excessively higher than the wanted signal, the wanted signal is actually amplified by a small multiple, so that power of an amplified wanted signal is small, and the signal even is not identified as a wanted signal, resulting in blocking on the terminal device. In addition, the interference in the direction C cannot be quantized currently. Consequently, the terminal device may operate in a case of strong interference, and performance of the terminal device is affected.

In view of the foregoing problem, in embodiments of this application, interference received by the terminal device when the terminal device accesses an aggregated bandwidth is determined, and bandwidth configuration information is sent to the terminal device based on the interference. This helps prevent the terminal device from operating in a bandwidth with strong interference, and helps improve performance of the terminal device.

To better understand an interference determining method disclosed in embodiments of this application, a communication system applicable to embodiments of this application is first described below.

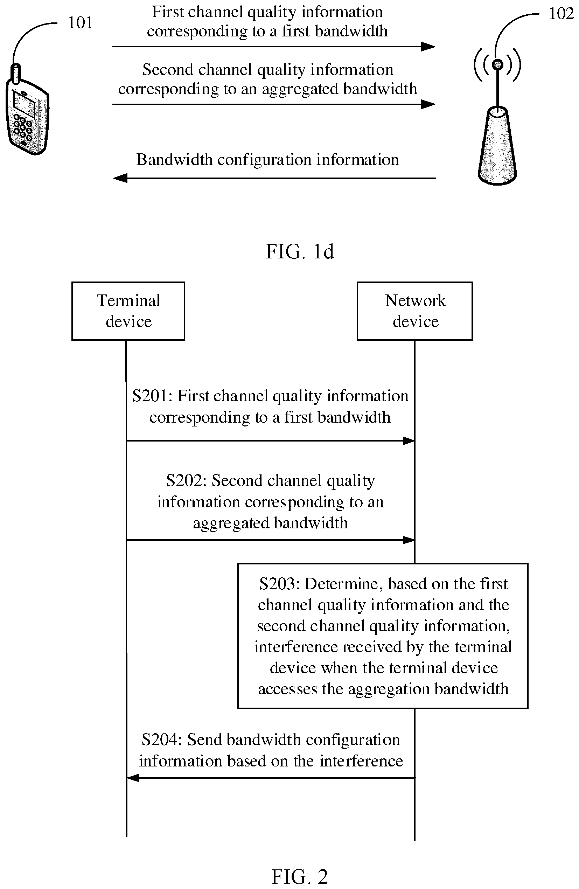

FIG. 1d is a schematic diagram of an architecture of a communication system according to an embodiment of this application. As shown in FIG. 1d, the communication system includes: a terminal device 101 and a network device 102.

The terminal device 101 may be configured to: when the terminal device 101 accesses a first bandwidth, send, to the network device 102, first channel quality information corresponding to the first bandwidth; and when the terminal device 101 accesses an aggregated bandwidth, send, to the network device 102, second channel quality information corresponding to the aggregated bandwidth. The aggregated bandwidth is obtained by aggregating at least the first bandwidth and a second bandwidth, and a spectrum of a third bandwidth is spaced between a spectrum of the first bandwidth and a spectrum of the second bandwidth.

Correspondingly, the network device 102 may be configured to: receive the first channel quality information and the second channel quality information from the terminal device 101; determine, based on the first channel quality information and the second channel quality information, interference received by the terminal device 101 when the terminal device 101 accesses the aggregated bandwidth; and send bandwidth configuration information to the terminal device 101 based on the interference. Correspondingly, the terminal device 101 may be further configured to receive the bandwidth configuration information.

The interference received by the terminal device 101 when the terminal device 101 accesses the aggregated bandwidth is determined based on the first channel quality information and the second channel quality information. In this way, the interference can be quantized, and the bandwidth configuration information is sent to the terminal device 101 based on the interference. Further, the terminal device 101 may determine an operating bandwidth based on the bandwidth configuration information. This manner helps the terminal device to operate in the operating bandwidth with low interference, that is, helps prevent the terminal device from operating in a bandwidth with strong interference, and helps improve performance of the terminal device.

The terminal device 101 may be a user side entity configured to receive or transmit a signal. The terminal device may be referred to as a terminal (terminal), user equipment (user equipment, UE), a mobile station (mobile station, MS), a mobile terminal (mobile terminal, MT), or the like. The terminal device may be deployed on land, where the deployment includes an indoor or outdoor deployment, or a handheld or vehicle-mounted deployment, may be deployed on water (for example, on a ship), or may be deployed in air (for example, on aircraft, a balloon, or an artificial satellite). The terminal device includes a handheld device, a vehicle-mounted device, a wearable device, or a computing device having a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a smart vehicle (smart vehicle) terminal device, a wireless terminal in industrial control, a wireless terminal in self-driving, an uncrewed aerial vehicle, an uncrewed aerial vehicle controller, a wireless terminal in telemedicine, a wireless terminal in a smart grid, a wireless terminal in a smart city (smart city), a wireless terminal in a smart home (smart home), or the like. A specific technology and a specific device form that are used by the terminal device are not limited in embodiments of this application.

The network device 102 may be a network side entity configured to transmit or receive a signal. The network device may be an access network device, and the access network device may provide the terminal device with functions such as radio resource management, quality of service management, and data encryption and compression. The access network device may be a radio access network (radio access network, RAN) device. The access network device may include a base station (base station, BS), and may be a device that is deployed in a radio access network and that can perform wireless communication with the terminal device. The base station may have a plurality of forms, for example, a macro base station, a micro base station, a relay station, an access point, a satellite, and an uncrewed aerial vehicle. For example, the access network device may be a base station in a 5^{th} generation (5^{th} generation, 5G) communication system or a base station in a Long Term Evolution (long term evolution, LTE) system. The base station in 5G may also be referred to as a transmission reception point (transmission reception point, TRP) or a next generation NodeB (next generation NodeB, gNB). A specific technology and a specific device form that are used by the network device are not limited in embodiments of this application.

The technology described in embodiments of this application may be applied to various communication systems, for example, the 5^{th} generation (5^{th} generation, 5G) communication system, a system integrating a plurality of communication systems, or a future evolved communication system, for example, a 6G communication system. It should be noted that network element names, message names, and the like mentioned in embodiments of this application are used as examples, and the network element names and message names applied to different communication systems may be different. This is not limited in embodiments of this application.

It can be understood that the communication system described in embodiments of this application is for describing the technical solution in embodiments of this application more clearly, but does not limit the technical solution provided in embodiments of this application. A person skilled in the art may learn that with evolution of a system architecture and emergence of a new service scenario, the technical solutions provided in embodiments of this application is also applicable to a similar technical problem.

The following describes an interference determining method and a communication apparatus provided in this application in detail with reference to the accompanying drawings.

FIG. 2 is a schematic flowchart of an interference determining method according to an embodiment of this application. The method includes but is not limited to the following steps.

Step S201: When a terminal device accesses a first bandwidth, the terminal device sends, to a network device, first channel quality information corresponding to the first bandwidth. Correspondingly, the network device receives the first channel quality information from the terminal device, where the first channel quality information is sent by the terminal device when the terminal device accesses the first bandwidth.

The first bandwidth is a low bandwidth. In an implementation, the terminal device may access the first bandwidth in random access, determine the first channel quality information corresponding to the first bandwidth when the terminal device accesses the first bandwidth, and send the first channel quality information to the network device. In this embodiment of this application, channel quality information (such as the first channel quality information and second channel quality information) may include but is not limited to one or more of a received signal strength indication (received signal strength indication, RSSI) or a channel quality indication (channel quality indication, CQI).

It should be noted that, that the terminal device accesses a bandwidth may be understood as that the terminal device accesses a cell corresponding to the bandwidth. One cell may correspond to one or more bandwidths, the one or more bandwidths corresponding to the cell may include a low bandwidth and an aggregated bandwidth, and there may be one or more low bandwidths and one or more high bandwidths. Optionally, the first bandwidth may be configured by the network device for the terminal device.

In an implementation, the terminal device may determine the first channel quality information corresponding to the first bandwidth in the following manner: The terminal device receives, from the network device, a channel state information reference signal (channel state information reference signal, CSI-RS) of a cell corresponding to the first bandwidth; and obtains the first channel quality information through measurement based on the CSI-RS.

Step S202: When the terminal device accesses an aggregated bandwidth, the terminal device sends, to the network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth. Correspondingly, the network device receives the second channel quality information from the terminal device, where the second channel quality information is sent by the terminal device when the terminal device accesses the aggregated bandwidth.

After accessing the first bandwidth (the low bandwidth), the terminal device may switch from the first bandwidth to the aggregated bandwidth. In other words, an operating bandwidth of the terminal device changes from the first bandwidth to the aggregated bandwidth.

The aggregated bandwidth is obtained by aggregating at least the first bandwidth and the second bandwidth, and the spectrum of the third bandwidth is spaced between the spectrum of the first bandwidth and the spectrum of the second bandwidth. The first bandwidth, the second bandwidth, and the third bandwidth all may be low bandwidths. Alternatively, the first bandwidth and the second bandwidth are low bandwidths, and there may be one or more third bandwidths. If the spectrum of the third bandwidth is spaced between the spectrum of the first bandwidth and the spectrum of the second bandwidth, it indicates that the spectrum of the first bandwidth and the spectrum of the second bandwidth are discontinuous. In this case, the terminal device operates in the aggregated bandwidth, and a signal of the third bandwidth causes interference received by the terminal device. It should be noted that the signal of the third bandwidth may be a signal carried on a carrier corresponding to the spectrum of the third bandwidth. Different spectrums may correspond to different carriers. Optionally, the low bandwidth and the aggregated bandwidth in embodiments of this application may be a frequency division duplexing (frequency division duplexing, FDD) bandwidth, a time division duplex (time division duplex, TDD) bandwidth, a standard bandwidth, or a nonstandard bandwidth. This is not limited in embodiments of this application. The standard bandwidth may indicate a bandwidth defined by a standard protocol, and the nonstandard bandwidth may indicate a bandwidth other than the bandwidth defined by the standard protocol.

In an implementation, both the first bandwidth and the second bandwidth may correspond to a first operator, and the third bandwidth corresponds to a second operator. In other words, a bandwidth of a different operator is spaced between the first bandwidth and the second bandwidth. In this case, the interference received by the terminal device when the terminal device accesses the aggregated bandwidth is interference from the different operator. The first bandwidth corresponding to the first operator may indicate that the first bandwidth is allocated to the first operator, and the first operator has rights of scheduling and allocating the first bandwidth. In another implementation, the first bandwidth and the second bandwidth may correspond to different operators. For example, the first bandwidth corresponds to an operator a, the second bandwidth corresponds to an operator b, and the third bandwidth corresponds to an operator c. The operator a and the operator b may be operators sharing bandwidth resources.

Optionally, the cell corresponding to the first bandwidth and a cell corresponding to the aggregated bandwidth may be a same cell. The network device may be a network device (for example, an access network device) corresponding to the cell.

Optionally, after accessing the first bandwidth, the terminal device may receive first bandwidth configuration information from the network device, where the first bandwidth configuration information may indicate the aggregated bandwidth. Then, the terminal device may determine the operating bandwidth of the terminal device as the aggregated bandwidth based on the first bandwidth configuration information. If the first bandwidth configuration information is received, and the operating bandwidth of the terminal device is the first bandwidth, the terminal device may be switched from the first bandwidth to the aggregated bandwidth. If the first bandwidth configuration information is received, and the operating bandwidth of the terminal device is the aggregated bandwidth, the terminal device may keep operating in the aggregated bandwidth. Optionally, after accessing the first bandwidth, the terminal device may alternatively access the aggregated bandwidth autonomously.

In an implementation, the terminal device may send capability information of the terminal device to the network device, where the capability information may indicate whether the terminal device supports accessing the aggregated bandwidth. Correspondingly, the network device receives the capability information from the terminal device, and determines, based on the capability information, whether the terminal device supports accessing the aggregated bandwidth. The network device sends the first bandwidth configuration information to the terminal device only when determining that the terminal device supports accessing the aggregated bandwidth. Alternatively, the terminal device attempts to access the aggregated bandwidth only when the terminal device supports accessing the aggregated bandwidth.

In an implementation, the terminal device may determine the second channel quality information corresponding to the aggregated bandwidth in the following manner: The terminal device receives, from the network device, a CSI-RS of the cell corresponding to the aggregated bandwidth; and obtains the second channel quality information through measurement based on the CSI-RS. Optionally, the network device may send the first bandwidth configuration information to the terminal device when determining that the terminal device supports accessing the aggregated bandwidth.

Step S203: The network device determines, based on the first channel quality information and the second channel quality information, the interference received by the terminal device when the terminal device accesses the aggregated bandwidth.

After receiving the first channel quality information and the second channel quality information, the network device may determine, based on the first channel quality information and the second channel quality information, the interference received by the terminal device when the terminal device accesses the aggregated bandwidth.

In an implementation, the network device may determine, based on a ratio of an evaluation value of the second channel quality information to an evaluation value of the first channel quality information, an interference value of the interference received by the terminal device when the terminal device accesses the aggregated bandwidth. Specifically, the network device may determine the ratio of the evaluation value of the second channel quality information to the evaluation value of the first channel quality information as the interference value of the interference received by the terminal device when the terminal device accesses the aggregated bandwidth.

It should be noted that the channel quality information (such as the first channel quality information and the second channel quality information) includes an interference signal power, the first channel quality information is channel quality information corresponding to the low bandwidth (the first bandwidth), and the second channel quality information is channel quality information corresponding to the high bandwidth (the aggregated bandwidth). It can be learned from the foregoing descriptions that the two levels of filters in the terminal device can filter out the interference caused when the terminal device operates in the low bandwidth, but cannot filter out the interference from the third bandwidth when the terminal device operates in the aggregated bandwidth. Therefore, the ratio of the evaluation value of the second channel quality information to the evaluation value of the first channel quality information may be used to quantize the interference received by the terminal device when the terminal device accesses the aggregated bandwidth. It should be noted that a reference signal received power (reference signal received power, RSRP) does not include the interference signal power. Therefore, the interference received by the terminal device when the terminal device accesses the aggregated bandwidth cannot be quantized by using the RSRP.

The channel quality information (such as the first channel quality information and the second channel quality information) may include but is not limited to one or more of the RSSI or the CQI. The RSSI includes both a wanted signal power and the interference signal power. Therefore, the RSSI is used to quantize the interference received by the terminal device when the terminal device accesses the aggregated bandwidth, and this helps improve precision of quantizing the interference.

Step S204: The network device sends the bandwidth configuration information to the terminal device based on the interference. Correspondingly, the terminal device receives the bandwidth configuration information from the network device.

After determining the interference received by the terminal device when the terminal device accesses the aggregated bandwidth, the network device may send the bandwidth configuration information (for example, referred to as second bandwidth configuration information) to the terminal device based on the interference. The terminal device may adjust the operating bandwidth or keep the operating bandwidth unchanged based on the second bandwidth configuration information.

In an implementation, after operating in the aggregated bandwidth and sending the second channel quality information to the network device, the terminal device may periodically fall back to the first bandwidth (that is, periodically access the first bandwidth), measure the channel quality information corresponding to the first bandwidth, and send the measured channel quality information to the network device. Alternatively, the terminal device may periodically switch to the aggregated bandwidth, measure the channel quality information corresponding to the aggregated bandwidth, and send the measured channel quality information to the network device. Therefore, when the terminal device receives the second bandwidth configuration information, the operating bandwidth of the terminal device may be the first bandwidth, or may be the aggregated bandwidth, or may be a bandwidth other than the first bandwidth and the aggregated bandwidth.

The second bandwidth configuration information may indicate the first bandwidth or the aggregated bandwidth. When the second bandwidth configuration information indicates a bandwidth, it may indicate that the network device configures the operating bandwidth of the terminal device as the bandwidth. In this embodiment of this application, that the second bandwidth configuration information indicates the first bandwidth has a same meaning as that the second bandwidth configuration information indicates that the operating bandwidth of the terminal device is the first bandwidth. Similarly, that the second bandwidth configuration information indicates the aggregated bandwidth has a same meaning as that the second bandwidth configuration information indicates that the operating bandwidth of the terminal device is the aggregated bandwidth. In an implementation, if the interference value of the interference received by the terminal device when the terminal device accesses the aggregated bandwidth is greater than a preset interference value, the second bandwidth configuration information may indicate that the operating bandwidth of the terminal device is the first bandwidth. This manner helps the terminal device to operate in the first bandwidth with low interference, and helps improve performance of the terminal device. In an implementation, if the interference value of the interference received by the terminal device when the terminal device accesses the aggregated bandwidth is less than or equal to the preset interference value, the bandwidth configuration information may indicate that the operating bandwidth of the terminal device is the aggregated bandwidth. In this manner, when the interference is low, the device operates in the aggregated bandwidth, which helps obtain a high bandwidth service. The preset interference value may be indicated by the network device, or may be agreed on in a protocol. The preset interference value may be an empirical value. This is not limited in embodiments of this application.

For example, the second bandwidth configuration information indicates the first bandwidth. When the terminal device receives the second bandwidth configuration information, if the operating bandwidth of the terminal device is the aggregated bandwidth, the terminal device may be switched from the aggregated bandwidth to the first bandwidth. If the operating bandwidth of the terminal device is the first bandwidth, the terminal device may keep operating in the first bandwidth. For example, the second bandwidth configuration information indicates the aggregated bandwidth. When the terminal device receives the second bandwidth configuration information, if the operating bandwidth of the terminal device is the aggregated bandwidth, the terminal device may keep operating in the aggregated bandwidth. If the operating bandwidth of the terminal device is the first bandwidth, the terminal device may be switched from the first bandwidth to the aggregated bandwidth.

In this embodiment of this application, the interference received by the terminal device when the terminal device accesses the aggregated bandwidth is determined based on the first channel quality information and the second channel quality information, so that the interference can be quantized. In addition, this helps adaptively adjust, based on the interference, whether the terminal device operates in the high bandwidth or the low bandwidth. This helps the terminal device to operate in the operating bandwidth with the low interference, that is, helps prevent the terminal device from operating in a bandwidth with strong interference, and helps improve performance of the terminal device. In addition, this manner helps resolve a problem that the terminal device is blocked due to the interference from the different operator, helps provide application feasibility for aggregating discrete spectrums into a virtual high bandwidth, and also helps provide implementation feasibility for co-construction and sharing of operators. In this way, resource utilization is improved and user experience is improved.

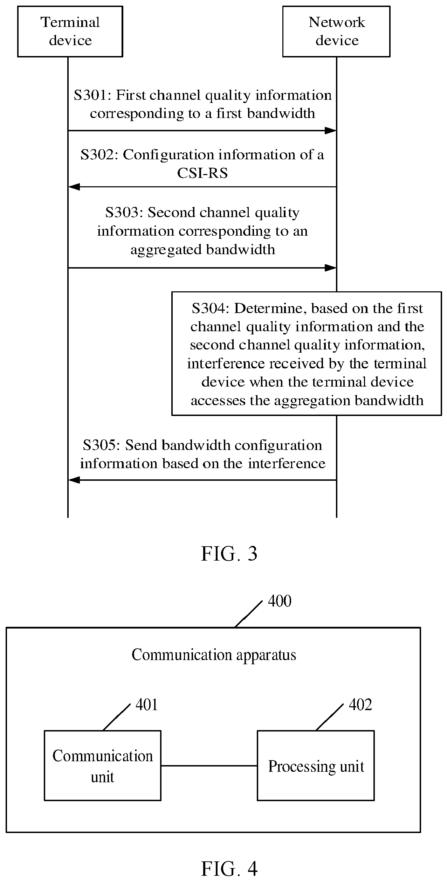

FIG. 3 is a schematic flowchart of another interference determining method according to an embodiment of this application. In the method, how a network device configures configuration information of a CSI-RS for a terminal device, and how the terminal device sends, to the network device based on the configuration information of the CSI-RS, second channel quality information corresponding to an aggregated bandwidth are described. The method may include but is not limited to the following steps.

Step S301: When a terminal device accesses a first bandwidth, the terminal device sends, to a network device, first channel quality information corresponding to the first bandwidth. Correspondingly, the network device receives the first channel quality information from the terminal device, where the first channel quality information is sent by the terminal device when the terminal device accesses the first bandwidth.

It should be noted that, for a process of performing step S301, refer to the detailed descriptions of step S201 in FIG. 2. Details are not described herein again.

Step S302: The network device sends configuration information of a CSI-RS to the terminal device, where the configuration information of the CSI-RS includes configuration information of a CSI-RS corresponding to the first bandwidth and configuration information of a CSI-RS corresponding to a second bandwidth. Correspondingly, the terminal device receives the configuration information of the CSI-RS from the network device.

The configuration information of the CSI-RS may be used by the terminal device to measure second channel quality information corresponding to an aggregated bandwidth. The configuration information of the CSI-RS may include but is not limited to one or more of the following: a time-frequency location of the CSI-RS and periodicity information of a periodic CSI-RS. Correspondingly, the configuration information of the CSI-RS (for example, referred to as a first CSI-RS) corresponding to the first bandwidth may include but is not limited to one or more of the following: a time-frequency location of the first CSI-RS and periodicity information of the first CSI-RS (if the first CSI-RS is a periodic CSI-RS). The configuration information of the CSI-RS (for example, referred to as a second CSI-RS) corresponding to the second bandwidth may include but is not limited to one or more of the following: a time-frequency location of the second CSI-RS and periodicity information of the second CSI-RS (if the second CSI-RS is a periodic CSI-RS).

In an implementation, the network device may configure the configuration information of the CSI-RS based on capability information of the terminal device. The terminal device may send the capability information to the network device. The capability information may indicate at least one of the following: whether the terminal device supports a periodic CSI-RS, whether the terminal device supports an aperiodic CSI-RS, whether the terminal device supports m periodic CSI-RSs, and whether the terminal device supports n aperiodic CSI-RSs. Both m and n are integers.

Optionally, a quantity of low bandwidths included in the aggregated bandwidth is indicated by z (z≥2). If m≥z, the network device may configure z periodic CSI-RSs for the terminal device. In this case, the configuration information of the CSI-RS may include configuration information of the z periodic CSI-RSs. If n≥z, the network device may configure z aperiodic CSI-RSs for the terminal device. In this case, the configuration information of the CSI-RS may include configuration information of the z aperiodic CSI-RSs. If m<z, the network device may configure m periodic CSI-RSs for the terminal device, and configure (z-m) aperiodic CSI-RSs for the terminal device. In this case, the configuration information of the CSI-RS may include configuration information of the m periodic CSI-RSs and configuration information of the (z-m) aperiodic CSI-RSs. If n<z, the network device may configure n aperiodic CSI-RSs for the terminal device, and configure (z-n) periodic CSI-RSs for the terminal device. In this case, the configuration information of the CSI-RS may include configuration information of the n aperiodic CSI-RSs and configuration information of the (z-n) periodic CSI-RSs. If m<z, the network device may configure one periodic CSI-RS for a part of low bandwidths (for example, one low bandwidth: the first bandwidth) included in the aggregated bandwidth. In this case, the configuration information of the CSI-RS may include configuration information of the one periodic CSI-RS. It should be noted that the part of low bandwidths may be z1 low bandwidths, where 1<zl<z. Correspondingly, in this case, the configuration information of the CSI-RS may include configuration information of z1 periodic CSI-RSs, and one low bandwidth corresponds to configuration information of one periodic CSI-RS. If n<z, the network device may configure one aperiodic CSI-RS for a part of low bandwidths (for example, one low bandwidth: the second bandwidth) included in the aggregated bandwidth. In this case, the configuration information of the CSI-RS may include configuration information of the one aperiodic CSI-RS. It should be noted that the part of low bandwidths may be z2 low bandwidths, where 1<z2<z. Correspondingly, in this case, the configuration information of the CSI-RS may include configuration information of z2 aperiodic CSI-RSs, and one low bandwidth corresponds to configuration information of one aperiodic CSI-RS.

In an implementation, when a quantity of CSI-RSs configured by the network device for the terminal device is less than the quantity of low bandwidths included in the aggregated bandwidth, that is, when the configuration information of the CSI-RS is only configuration information of a CSI-RS configured for a part of low bandwidths included in the aggregated bandwidth, channel quality information corresponding to the other part of low bandwidths included in the aggregated bandwidth may be channel quality information corresponding to low bandwidths configured with the configuration information of the CSI-RS, that is, an existing CSI measurement result is reused. For example, if the aggregated bandwidth is obtained by aggregating a low bandwidth a, a low bandwidth b, and a low bandwidth c, the configuration information of the CSI-RS sent by the network device to the terminal device includes configuration information of a CSI-RS corresponding to the low bandwidth a and configuration information of a CSI-RS corresponding to the low bandwidth b, and does not include configuration information of a CSI-RS corresponding to the low bandwidth c. In this case, the terminal device may measure, based on the configuration information of the CSI-RS corresponding to the low bandwidth b, channel quality information corresponding to the low bandwidth b, and reuse the channel quality information corresponding to the low bandwidth b as channel quality information corresponding to the low bandwidth c. In other words, for a low bandwidth (for example, referred to as a low bandwidth 1) for which configuration information of a CSI-RS is not configured, a CSI measurement result of a spectrum (the spectrum is a spectrum of a low bandwidth in the aggregated bandwidth) closest to a spectrum of the low bandwidth 1 in the aggregated bandwidth may be used as a CSI measurement result of the low bandwidth 1.

Step S303: When the terminal device accesses the aggregated bandwidth, the terminal device sends, to the network device based on the configuration information of the CSI-RS, the second channel quality information corresponding to the aggregated bandwidth, where the aggregated bandwidth is obtained by aggregating at least the first bandwidth and the second bandwidth, and a spectrum of a third bandwidth is spaced between a spectrum of the first bandwidth and a spectrum of the second bandwidth. Correspondingly, the network device receives the second channel quality information from the terminal device, where the second channel quality information is sent by the terminal device when the terminal device accesses the aggregated bandwidth.

After receiving the configuration information of the CSI-RS from the network device, the terminal device may obtain the second channel quality information through measurement based on the configuration information of the CSI-RS, and send the second channel quality information to the network device. Specifically, the terminal device may obtain, through measurement based on the configuration information of the CSI-RS corresponding to the first bandwidth, channel quality information corresponding to the first bandwidth, and obtain, through measurement based on the configuration information of the CSI-RS corresponding to the second bandwidth, channel quality information corresponding to the second bandwidth. In other words, the second channel quality information corresponding to the aggregated bandwidth may include the channel quality information corresponding to the first bandwidth and the channel quality information corresponding to the second bandwidth that are obtained through measurement when the terminal device accesses the aggregated bandwidth.

It should be noted that for a remaining process of performing step S303, refer to the detailed descriptions of step S202 in FIG. 2. Details are not described herein.

Step S304: The network device determines, based on the first channel quality information and the second channel quality information, interference received by the terminal device when the terminal device accesses the aggregated bandwidth.

Step S305: The network device sends bandwidth configuration information to the terminal device based on the interference. Correspondingly, the terminal device receives the bandwidth configuration information from the network device.

It should be noted that, for a process of performing step S304 and step S305, refer to the detailed descriptions of step S203 and step S204 in FIG. 2. Details are not described herein again.

In this embodiment of this application, the interference received by the terminal device when the terminal device accesses the aggregated bandwidth is determined based on the first channel quality information and the second channel quality information, so that the interference can be quantized. In addition, this helps adaptively adjust, based on the interference, whether the terminal device operates in the high bandwidth or the low bandwidth. This helps the terminal device operate in the operating bandwidth with the low interference, that is, helps prevent the terminal device from operating in a bandwidth with strong interference, and helps improve performance of the terminal device. In addition, this manner helps resolve a problem that the terminal device is blocked due to interference from a different operator, helps provide application feasibility for aggregating discrete spectrums into a virtual high bandwidth, and also helps provide implementation feasibility for co-construction and sharing of operators. In this way, resource utilization is improved and user experience is improved.

In an implementation, the terminal device may support a multi-slice filtering mechanism in the aggregated bandwidth, and the interference received by the terminal device when the terminal device accesses the aggregated bandwidth can be filtered out based on the mechanism. That the terminal device supports the multi-slice filtering mechanism in the aggregated bandwidth may indicate that the terminal device may identify each low bandwidth included in the aggregated bandwidth, and may perform adaptive filtering on each low bandwidth. That the adaptive filtering is performed on each low bandwidth indicates that a width of a filter can be automatically adjusted for each low bandwidth, to filter out interference outside a carrier width. For example, the aggregated bandwidth is obtained by aggregating the first bandwidth and the second bandwidth, where a carrier width of the first bandwidth is 5 M, and a carrier width of the second bandwidth is 10 M. In this case, the terminal device may identify information carried on a carrier of the first bandwidth, and for the information, the width of the filter may be automatically adjusted to 5 M, so that interference from another carrier can be filtered out. Similarly, the terminal device may identify information carried on a carrier of the second bandwidth, and for the information, the width of the filter may be automatically adjusted to 10 M, so that interference from another carrier can be filtered out. In this manner, a problem of the interference in the aggregated bandwidth can be fundamentally resolved.

Corresponding to the method provided in the foregoing method embodiments, embodiments of this application further provide a corresponding apparatus, including a corresponding module or unit configured to execute the foregoing embodiments. The module or unit may be software, hardware, or a combination of software and hardware.

FIG. 4 is a schematic diagram of a structure of a communication apparatus according to this application. The communication apparatus 400 shown in FIG. 4 include a communication unit 401 and a processing unit 402.

In a design, the communication apparatus 400 is a network device.

For example, the communication unit 401 is configured to receive, from a terminal device, first channel quality information corresponding to a first bandwidth, where the first channel quality information is sent by the terminal device when the terminal device accesses the first bandwidth; the communication unit 401 is further configured to receive, from the terminal device, second channel quality information corresponding to an aggregated bandwidth, where the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth; the processing unit 402 is configured to determine, based on the first channel quality information and the second channel quality information, interference received by the terminal device when the terminal device accesses the aggregated bandwidth; and the communication unit 401 is further configured to send bandwidth configuration information to the terminal device based on the interference.

In an implementation, if an interference value of the interference is greater than a preset interference value, the bandwidth configuration information indicates that an operating bandwidth of the terminal device is the first bandwidth.

In an implementation, if the interference value of the interference is less than or equal to the preset interference value, the bandwidth configuration information indicates that the operating bandwidth of the terminal device is the aggregated bandwidth.

In an implementation, when the processing unit 402 is configured to: determine, based on the first channel quality information and the second channel quality information, the interference received by the terminal device when the terminal device accesses the aggregated bandwidth, the processing unit 402 is specifically configured to determine a ratio of an evaluation value of the second channel quality information to an evaluation value of the first channel quality information as the interference value of the interference received by the terminal device when the terminal device accesses the aggregated bandwidth.

In an implementation, both the first bandwidth and the second bandwidth correspond to a first operator, and the third bandwidth corresponds to a second operator.

In an implementation, the communication unit 401 is further configured to receive capability information of the terminal device from the terminal device, where the capability information indicates that the terminal device supports accessing the aggregated bandwidth; and the processing unit 402 is further configured to determine, based on the capability information, that the terminal device supports accessing the aggregated bandwidth.

In an implementation, the communication unit 401 is further configured to send a channel state information reference signal CSI-RS of a cell corresponding to the first bandwidth, where the first channel quality information is determined based on the CSI-RS when the terminal device accesses the cell.

In an implementation, the communication unit 401 is further configured to send the configuration information of the CSI-RS to the terminal device, where the configuration information of the CSI-RS includes the configuration information of the CSI-RS corresponding to the first bandwidth and the configuration information of the CSI-RS corresponding to the second bandwidth.

In an implementation, channel quality information includes one or more of a received signal strength indication RSSI or a channel quality indication CQI.

When the communication apparatus 400 is the network device, the communication apparatus is configured to implement functions of the network device in embodiments corresponding to FIG. 2 and FIG. 3.

In a design, the communication apparatus 400 is the terminal device.

For example, the processing unit 402 is configured to: when communication apparatus 400 accesses a first bandwidth, invoke the communication unit 401 to send, to a network device, first channel quality information corresponding to the first bandwidth; the processing unit 402 is further configured to: when communication apparatus 400 accesses an aggregated bandwidth, invoke the communication unit 401 to send, to the network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth; and the processing unit 402 is further configured to invoke the communication unit 401 to receive bandwidth configuration information from the network device, where the bandwidth configuration information is sent by the network device based on interference received by the communication apparatus 400 when the communication apparatus 400 accesses the aggregated bandwidth, and the interference is determined based on the first channel quality information and the second channel quality information.

In an implementation, if an interference value of the interference is greater than a preset interference value, the bandwidth configuration information indicates that an operating bandwidth of the communication apparatus 400 is the first bandwidth.

In an implementation, if the interference value of the interference is less than or equal to the preset interference value, the bandwidth configuration information indicates that the operating bandwidth of the communication apparatus 400 is the aggregated bandwidth.

In an implementation, the interference value of the interference is a ratio of an evaluation value of the second channel quality information to an evaluation value of the first channel quality information.

In an implementation, both the first bandwidth and the second bandwidth correspond to a first operator, and the third bandwidth corresponds to a second operator.

In an implementation, the processing unit 402 is further configured to invoke the communication unit 401 to send capability information of the communication apparatus 400 to the network device, where the capability information indicates that the communication apparatus 400 supports accessing the aggregated bandwidth.

In an implementation, the processing unit 402 is further configured to: invoke the communication unit 401 to receive, from the network device, a channel state information reference signal CSI-RS of a cell corresponding to the first bandwidth; and determine the first channel quality information based on the CSI-RS.

In an implementation, the processing unit 402 is further configured to invoke the communication unit 401 to receive configuration information of a CSI-RS from the network device, where the configuration information of the CSI-RS includes configuration information of the CSI-RS corresponding to the first bandwidth and configuration information of a CSI-RS corresponding to the second bandwidth.

In an implementation, channel quality information includes one or more of a received signal strength indication RSSI or a channel quality indication CQI.

When the communication apparatus 400 is the terminal device, the communication apparatus 400 is configured to implement functions of the terminal device in embodiments shown in FIG. 2 and FIG. 3.

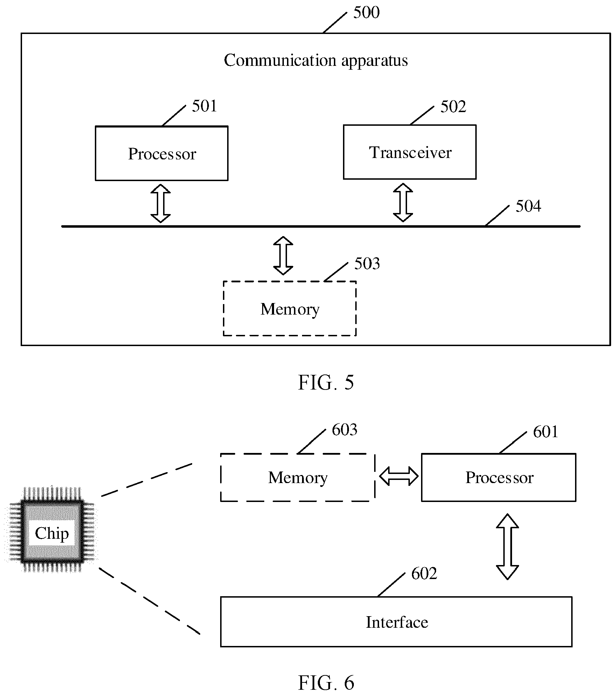

FIG. 5 is a schematic diagram of a structure of another communication apparatus according to this application. The communication apparatus 500 shown in FIG. 5 includes at least one processor 501 and a transceiver 502. Optionally, the apparatus may further include a memory 503.

The memory 503 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 503 is any other medium that can carry or store expected program code in a form of instruction or data structure and that can be accessed by a computer. However, the memory 503 is not limited thereto. The memory 503 may be a combination of the foregoing memories.

In embodiments of this application, a specific connection medium between the processor 501 and the transceiver 502, and the memory 503 is not limited. In this embodiment of this application, the processor 501 and the transceiver 502, and the memory 503 are connected to each other by using a bus 504 in the figure. The bus 504 is indicated by using a bold line in the figure. A connection manner of other components is merely an example for description, and is not used as a limitation. The bus 504 may be classified into an address bus, a data bus, a control bus, and the like. For ease of indication, the bus is indicated by using only one bold line in FIG. 5. However, this does not indicate that there is only one bus or only one type of bus.

The processor 501 may have a data sending/receiving function, and can communicate with another device. In the apparatus shown in FIG. 5, an independent data communication unit, for example, the transceiver 502, may be disposed, and is configured to receive and send data. When communicating with the another device, the processor 501 may perform data transmission through the transceiver 502.

In an example, when the network device is in the form shown in FIG. 5, the processor in FIG. 5 may perform the method performed by the network device in any one of the foregoing method embodiments.

In an example, when the terminal device is in the form shown in FIG. 5, the processor in FIG. 5 may perform the method performed by the terminal device in any one of the foregoing method embodiments.

Specifically, functions/implementation processes of both the processing unit and the communication unit in FIG. 4 may be implemented by the processor 501 in FIG. 5 by invoking computer-executable instructions stored in the memory 503. Alternatively, a function/an implementation process of the processing unit in FIG. 4 may be implemented by the processor 501 in FIG. 5 by invoking computer-executable instructions stored in the memory 503, and a function/an implementation process of the communication unit in FIG. 4 may be implemented by the transceiver 502 in FIG. 5.

In an implementation, the communication apparatus 500 may include a circuit, and the circuit may implement the sending, receiving, or communication function in the foregoing method embodiments. The processor described in this application may be implemented in the following manner: an integrated circuit (integrated circuit, IC), an analog IC, a radio frequency integrated circuit (RFIC), a mixed-signal IC, an application-specific integrated circuit (application-specific integrated circuit, ASIC), a printed circuit board (printed circuit board, PCB), an electronic device, or the like. The processor may alternatively be manufactured by using the following IC process technology, for example, a complementary metal oxide semiconductor (complementary metal oxide semiconductor, CMOS), an N-type metal oxide semiconductor (n-type metal-oxide-semiconductor, NMOS), a P-channel metal oxide semiconductor (p-channel metal oxide semiconductor, PMOS), a bipolar junction transistor (bipolar junction transistor, BJT), a bipolar CMOS (BiCMOS), silicon-germanium (SiGe), gallium arsenide (GaAs), or the like.

The communication apparatus described in the foregoing embodiments may be the network device, or the terminal device. However, a range of the communication apparatus described in this application is not limited thereto, and a structure of the communication apparatus may not be limited to FIG. 5. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device.

For a case in which the communication apparatus may be a chip or a chip system, refer to a schematic diagram of a structure of the chip shown in FIG. 6. The chip 600 shown in FIG. 6 includes a processor 601 and an interface 602. There may be one or more processors 601, and there may be a plurality of interfaces 602.

A case in which the chip 600 is configured to implement a function of the network device in embodiments of this application is described below.

The interface 602 is configured to receive, from a terminal device, first channel quality information corresponding to a first bandwidth, where the first channel quality information is sent by the terminal device when the terminal device accesses the first bandwidth.

The interface 602 is further configured to receive, from the terminal device, second channel quality information corresponding to an aggregated bandwidth, where the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth.

The processor 601 is configured to determine, based on the first channel quality information and the second channel quality information, interference received by the terminal device when the terminal device accesses the aggregated bandwidth.

The interface 602 is further configured to send bandwidth configuration information to the terminal device based on the interference.

Specifically, in this case, for operations performed by the processor 601 and the interface 602, refer to descriptions related to the network device in embodiments corresponding to FIG. 2 and FIG. 3.

A case in which the chip 600 is configured to implement a function of the terminal device in embodiments of this application is described below.

The processor 601 is configured to: when the chip 600 accesses a first bandwidth, invoke an interface 602 to send, to a network device, first channel quality information corresponding to the first bandwidth.

The processor 601 is further configured to: when the chip 600 accesses an aggregated bandwidth, invoke the interface 602 to send, to a network device, second channel quality information corresponding to the aggregated bandwidth, where the aggregated bandwidth is obtained by aggregating at least the first bandwidth and a second bandwidth, and a spectrum of a third bandwidth is spaced between a spectrum of the first bandwidth and a spectrum of the second bandwidth.

The processor 601 is further configured to invoke the interface 602 to receive bandwidth configuration information from the network device, where the bandwidth configuration information is sent by the network device based on interference received by the terminal device when the terminal device accesses the aggregated bandwidth, and the interference is determined based on the first channel quality information and the second channel quality information.

Specifically, in this case, for operations performed by the processor 601 and the interface 602, refer to descriptions related to the terminal device in embodiments corresponding to FIG. 2 and FIG. 3.

Optionally, the chip further includes a memory 603, and the memory 603 is configured to store a necessary computer program and necessary data. The memory 603 may be separately disposed, or may be integrated with the processor 601, as shown in the dashed box 603 in FIG. 6.

An embodiment of this application further provides a communication system. The system may include the network device and the terminal device in embodiments corresponding to FIG. 2 and FIG. 3.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding applications, but it should not be considered that the implementation goes beyond the scope of embodiments of this application.

The solutions described in this application may be implemented in various manners. For example, the technologies may be implemented by hardware, software, or a combination thereof. For implementation by using the hardware, a processing unit configured to execute these technologies in a communication apparatus (for example, a base station, a terminal, a network entity, a core network element, or a chip) may be implemented in one or more general-purpose processors, digital signal processors (digital signal processors, DSPs), digital signal processing components, application-specific integrated circuits (application-specific integrated circuits, ASICs), programmable logic devices, field programmable gate arrays (field programmable gate arrays, FPGAs) or other programmable logic apparatuses, discrete gates or transistor logic devices, discrete hardware components, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

All or a part of the foregoing embodiments may be implemented by using software, hardware, firmware, or any combination thereof. When software is used to implement embodiments, all or a part of embodiments may be implemented in a form of computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state drive (solid state drive, SSD)), or the like.

It may be understood that an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It may be understood that, in this application, "when", "if", and "in a case of" all mean that an apparatus performs corresponding processing in an objective case, are not intended to limit time, do not require the apparatus to necessarily have a determining action during implementation, and do not mean that there is another limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

"Predefine" in this application may be understood as "define", "predefine", "store", "pre-store", "pre-negotiate", "pre-configure", "solidify", or "pre-burn".

A person of ordinary skill in the art may understand that, for the purpose of convenient and brief description, for a detailed operating process of the foregoing system, apparatuses, and units, refer to a corresponding process in the foregoing method embodiment. Details are not described herein again.

For same or similar parts in embodiments of this application, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An interference determining method, wherein the method comprises:
receiving, by a network device from a terminal device, first channel quality information corresponding to a first bandwidth, wherein the first channel quality information is sent by the terminal device when the terminal device accesses the first bandwidth;
receiving, by the network device from the terminal device, second channel quality information corresponding to an aggregated bandwidth, wherein the second channel quality information is sent by the terminal device when the terminal device accesses the aggregated bandwidth, the aggregated bandwidth is obtained by aggregating at least the first bandwidth and a second bandwidth, and a spectrum of a third bandwidth is spaced between a spectrum of the first bandwidth and a spectrum of the second bandwidth;
determining, by the network device based on the first channel quality information and the second channel quality information, interference received by the terminal device when the terminal device accesses the aggregated bandwidth; and
sending, by the network device, bandwidth configuration information to the terminal device based on the interference.

2. The method according to claim 1, wherein if an interference value of the interference is greater than a preset interference value, the bandwidth configuration information indicates that an operating bandwidth of the terminal device is the first bandwidth.

3. The method according to claim 2, wherein if the interference value of the interference is less than or equal to the preset interference value, the bandwidth configuration information indicates that the operating bandwidth of the terminal device is the aggregated bandwidth.

4. The method according to any one of claims 1 to 3, wherein the determining, by the network device based on the first channel quality information and the second channel quality information, interference received by the terminal device when the terminal device accesses the aggregated bandwidth comprises:
determining, by the network device, a ratio of an evaluation value of the second channel quality information to an evaluation value of the first channel quality information as the interference value of the interference received by the terminal device when the terminal device accesses the aggregated bandwidth.

5. The method according to any one of claims 1 to 4, wherein both the first bandwidth and the second bandwidth correspond to a first operator, and the third bandwidth corresponds to a second operator.

6. The method according to any one of claims 1 to 5, wherein the method further comprises:
receiving, by the network device, capability information of the terminal device from the terminal device, wherein the capability information indicates that the terminal device supports accessing the aggregated bandwidth; and
determining, by the network device based on the capability information, that the terminal device supports accessing the aggregated bandwidth.

7. The method according to any one of claims 1 to 6, wherein the method further comprises:
sending, by the network device, a channel state information reference signal CSI-RS of a cell corresponding to the first bandwidth, wherein the first channel quality information is determined by the terminal device based on the CSI-RS when the terminal device accesses the cell.

8. The method according to any one of claims 1 to 7, wherein the method further comprises:
sending, by the network device, configuration information of a CSI-RS to the terminal device, wherein the configuration information of the CSI-RS comprises configuration information of the CSI-RS corresponding to the first bandwidth and configuration information of a CSI-RS corresponding to the second bandwidth.

9. The method according to any one of claims 1 to 8, wherein channel quality information comprises one or more of a received signal strength indication RSSI or a channel quality indication CQI.

10. An interference determining method, wherein the method comprises:
when a terminal device accesses a first bandwidth, sending, by the terminal device to a network device, first channel quality information corresponding to the first bandwidth;
when the terminal device accesses an aggregated bandwidth, sending, by the terminal device to the network device, second channel quality information corresponding to the aggregated bandwidth, wherein the aggregated bandwidth is obtained by aggregating at least the first bandwidth and a second bandwidth, and a spectrum of a third bandwidth is spaced between a spectrum of the first bandwidth and a spectrum of the second bandwidth; and
receiving, by the terminal device, bandwidth configuration information from the network device, wherein the bandwidth configuration information is sent by the network device based on interference received by the terminal device when the terminal device accesses the aggregated bandwidth, and the interference is determined based on the first channel quality information and the second channel quality information.

11. The method according to claim 10, wherein if an interference value of the interference is greater than a preset interference value, the bandwidth configuration information indicates that an operating bandwidth of the terminal device is the first bandwidth.

12. The method according to claim 11, wherein if the interference value of the interference is less than or equal to the preset interference value, the bandwidth configuration information indicates that the operating bandwidth of the terminal device is the aggregated bandwidth.

13. The method according to any one of claims 10 to 12, wherein the interference value of the interference is a ratio of an evaluation value of the second channel quality information to an evaluation value of the first channel quality information.

14. The method according to any one of claims 10 to 13, wherein both the first bandwidth and the second bandwidth correspond to a first operator, and the third bandwidth corresponds to a second operator.

15. The method according to any one of claims 10 to 14, wherein the method further comprises:
sending, by the terminal device, capability information of the terminal device to the network device, wherein the capability information indicates that the terminal device supports accessing the aggregated bandwidth.

16. The method according to any one of claims 10 to 15, wherein the method further comprises:
receiving, by the terminal device from the network device, a channel state information reference signal CSI-RS of a cell corresponding to the first bandwidth; and
determining, by the terminal device, the first channel quality information based on the CSI-RS.

17. The method according to any one of claims 10 to 16, wherein the method further comprises:
receiving, by the terminal device, configuration information of a CSI-RS from the network device, wherein the configuration information of the CSI-RS comprises configuration information of the CSI-RS corresponding to the first bandwidth and configuration information of a CSI-RS corresponding to the second bandwidth.

18. The method according to any one of claims 10 to 17, wherein channel quality information comprises one or more of a received signal strength indication RSSI or a channel quality indication CQI.

19. A communication apparatus, comprising a unit configured to perform the method according to any one of claims 1 to 9 or claims 10 to 18.

20. A communication apparatus, wherein the apparatus comprises a processor, and the processor performs the method according to any one of claims 1 to 9 or claims 10 to 18.

21. A computer-readable storage medium, wherein the computer-readable storage medium stores a computer program, the computer program comprises program instructions, and when a communication apparatus executes the program instructions, the method according to any one of claims 1 to 9 or claims 10 to 18 is performed.
